# EUROPÄISCHE PATENTANMELDUNG

(11) **EP 1 737 102 A1**
(43) Veröffentlichungstag der Anmeldung: **27.12.2006**
(21) Anmeldenummer: 06120094.5
(22) Anmeldetag: 13.08.2004
(51) Int. Cl.: H02K 3/52, H02K 15/095

(54) **Verfahren zum Wickeln eines Reluktanzmotors**

(30) Priorität: 18.08.2003 DE 10337916
(62) Teilanmeldung aus: 04766492.5
(71) Anmelder: Vorwerk & Co. Interholding GmbH, 42275 Wuppertal (DE)
(72) Erfinder: Caldewey, Uwe, 44229, Dortmund (DE); Lienenlüke, Paul, 45549, Sprockhövel (DE); Theuermann, Volker, 58453, Witten (DE)
(74) Vertreter: Müller, Enno

(57) **Zusammenfassung**

Die Erfindung betrifft ein Verfahren zum Wickeln eines Reluktanzmotors (1) mit einem Rotor (2) und einem Wickelkerne aufweisenden Stator (4), weiter mit einer geraden Anzahl von Statorspulen (3), wobei weiter ein Wickelkernschuhe (16) aufweisender Statorabdeckkörper vorgesehen ist. Um ein Verfahren der in Rede stehenden Art zu verbessern, wird vorgeschlagen, dass in einem ersten Schritt die Hälfte der Statorspulen (3) vermittels des die Wickelkerne überdeckenden Statorabdeckkörpers gleichzeitig gewickelt wird und dass in einem zweiten Schritt ohne Durchtrennung der Wicklungsdrähte (37) die zweite Hälfte der Statorspulen (3) gewickelt wird, so dass die Statorspulen paarweise miteinander verbunden werden.

## Beschreibung

Die Erfindung betrifft ein Verfahren zum Wickeln eines Reluktanzmotors mit einem Rotor und einem Stator, weiter mit einer geraden.

Reluktanzmotoren der in Rede stehenden Art sind bekannt. So wird beispielsweise auf die DE 100 35 540 A1 verwiesen. Dort ist ein Reluktanzmotor dargestellt und beschrieben, welcher zur Reduzierung der Schallemission bei Betrieb des Motors einen Statorabdeckkörper aufweist, der den Zwischenraum zwischen zwei benachbarten Statorspulen ausfüllt. Dieser Statorabdeckkörper ist im Wesentlichen als Hohlzylinder ausgebildet und weist eine der Spulenzahl entsprechende Anzahl von Wickelkernschuhen auf, welche im Wesentlichen außenseitig eines zylindrischen Grundkörpers parallel zur Körperachse des Statorabdeckkörpers ausgerichtet angeordnet sind. Der Statorabdeckkörper dient bei dieser bekannten Lösung zunächst als Wickelkörper. Der mit den um den Wickelkernschuhen aufgewickelten Statorwicklungen versehene Statorabdeckkörper wird abschließend in axialer Richtung in den Statorkern eingeschoben.

Im Hinblick auf den zuvor beschriebenen Stand der Technik wird eine technische Problematik der Erfindung darin gesehen, ein Verfahren der in Rede stehenden Art zu verbessern.

Diese Problematik ist zunächst und im Wesentlichen durch den Gegenstand des Anspruchs 1 gelöst, wobei darauf abgestellt ist, dass in einem ersten Schritt die Hälfte der Statorwicklungen gleichzeitig gewickelt wird und dass in einem zweiten Schritt ohne Durchtrennung der Wicklungsdrähte die zweite Hälfte der Statorwicklungen gewickelt wird. Zufolge dieses erfindungsgemäßen Verfahrens ist die Herstellung von Statorwicklungen wesentlich vereinfacht. So werden beispielsweise bei einem mit acht Statorspulen zu versehenen Stator zunächst vier in Umfangsrichtung nebeneinander liegende Statorwicklungen gleichzeitig erstellt, wonach die Wickelmaschine um das Maß der vier erstellten Spulen, das heißt bei einem acht Spulen umfassenden Stator um 180° verfährt, ohne dass hierbei die Wickeldrähte getrennt werden. Hierzu werden die Wickeldrähte vor einem Verfahren der Wickelmaschine in einen zu den Statorspulen abgetrennten Bereich verlegt. Nach dem Verfahren der Wickelmaschine wird die zweite Hälfte, beispielsweise die zweiten vier Statorwicklungen gewickelt, wonach bei einem Acht-Spulen-Stator zwei sich gegenüberliegende Statorspulen zur gleichzeitigen Bestromung in Reihe geschaltet sind. Eine aufwendige Kontaktierung und Verdrahtung der einzelnen Statorspulen entfällt aufgrund der erfindungsgemäßen Lösung. So ist weiter vorgesehen, dass beim Verfahren von der ersten Hälfte der Statorwicklungen zu der zweiten Hälfte der Statorwicklungen die Wicklungsdrähte der bereits gewickelten Statorwicklungen radial außen der Statorwicklungen geführt werden. Die Drähte werden von bzw. zu einem Anschlussstecker geführt, wobei an dem Anschlussstecker an einem oder mehreren Steckerplätzen zwei Wickeldrähte angeschlossen werden. So sind bei einem Acht-Spulen-Stator lediglich sechs Steckplätze vorgesehen, zufolge dessen zwei Steckplätze jeweils zwei Wickeldrähte fassen. Bevorzugt werden hierbei jeweils zwei Wickeldrähte zusammengefasst, deren zugeordnete Phasen zeitlich versetzt zueinander, nicht gleichzeitig bestromt werden. So sind bevorzugt die von der ersten und der dritten Phase zum Anschlussstecker führenden Wickeldrähte sowie die von der zweiten und vierten Phase zum Anschlussstecker geführten Wickeldrähte jeweils an einem Steckerplatz angeschlossen.

Nachstehend ist die Erfindung anhand der beigefügten Zeichnungen, welche lediglich ein Ausführungsbeispiel darstellen, näher erläutert. Es zeigt:
- Fig. 1: einen Reluktanzmotor in perspektivischer Zusammenbaudarstellung;

- Fig. 2: den Reluktanzmotor in perspektivischer Explosionsdarstellung;
- Fig. 3: einen zusammengesetzten, zweiteilig ausgebildeten Statorabdeckkörper in Perspektive;
- Fig. 4: das Oberteil des zweiteiligen Statorabdeckkörpers in Perspektive;
- Fig. 5: das Unterteil des zweiteiligen Statorabdeckkörpers in Perspektive;
- Fig. 6: das Statorabdeckkörper-Oberteil in Seitenansicht;
- Fig. 7: das Statorabdeckkörper-Oberteil in Draufsicht;
- Fig. 8: den vergrößerten Schnitt gemäß der Linie VIII - VIII in Fig. 7;
- Fig. 9: den herausvergrößerten Bereich IX in Fig. 7;
- Fig. 10: den vergrößerten Schnitt gemäß der Linie X - X in Fig. 9;
- Fig. 11: das Statorabdeckkörper-Unterteil in Seitenansicht;
- Fig. 12: das Statorabdeckkörper-Unterteil in Draufsicht;
- Fig. 13: den vergrößerten Schnitt gemäß der Linie XIII - XIII in Fig. 12;
- Fig. 14: den vergrößerten Schnitt gemäß der Linie XIV - XIV in Fig. 12;
- Fig. 15: den vergrößerten Schnitt gemäß der Linie XV - XV in Fig. 12;

- Fig. 16: die Draufsicht auf den zusammengesetzten Stator, bestehend aus einem Statorkern, dem Statorwicklungen tragenden Statorabdeckkörper sowie einer an dem Statorabdeckkörper befestigten Platine;

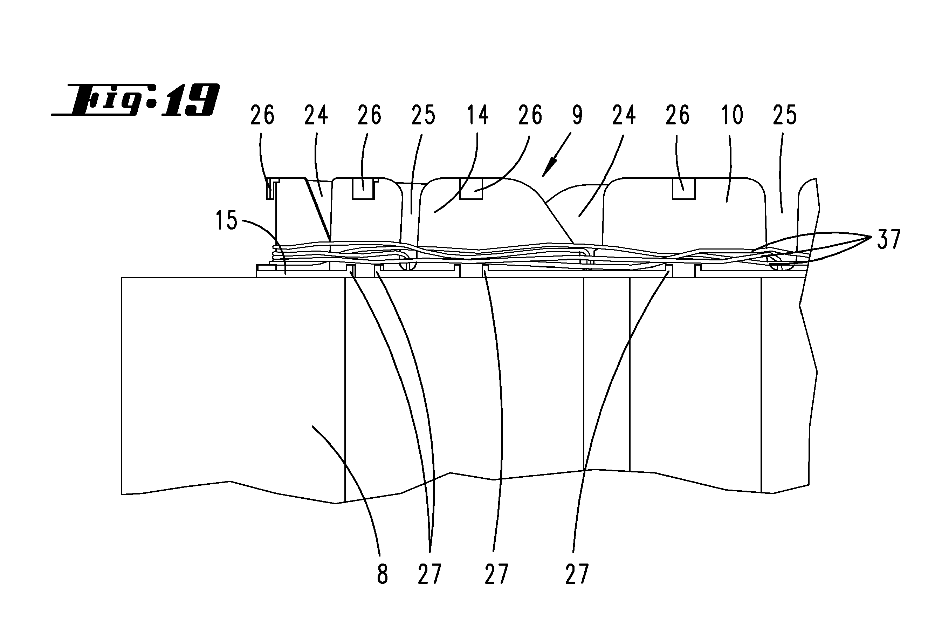

- Fig. 17: den Schnitt gemäß der Linie XVII - XVII in Fig. 16;
- Fig. 18: den Schnitt gemäß der Linie XVIII - XVIII in Fig. 16;

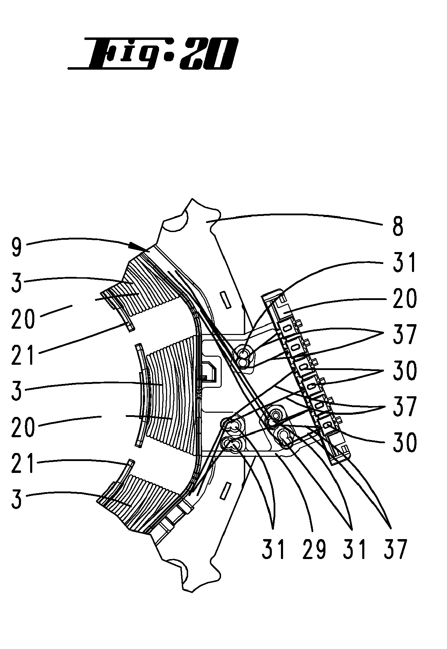

- Fig. 19: eine vergrößerte Seitenansichtsdarstellung des zusammengesetzten Stators;
- Fig. 20: eine Herausvergrößerung des Bereiches XX in Fig. 16, unter Fortlassung der in Fig. 16 dargestellten Platine;
- Fig. 21: die Unteransicht des in Fig. 20 dargestellten Bereiches mit Blick auf unterseitig der Platine angeordnete Lichtschranken;
- Fig. 22: ein Motorschaltbild zur Darstellung der Anschlüsse der einzelnen Statorspulen und
- Fig. 23: ein Elektronikschaltbild zur Darstellung der Ansteuerung der einzelnen Statorspulen.

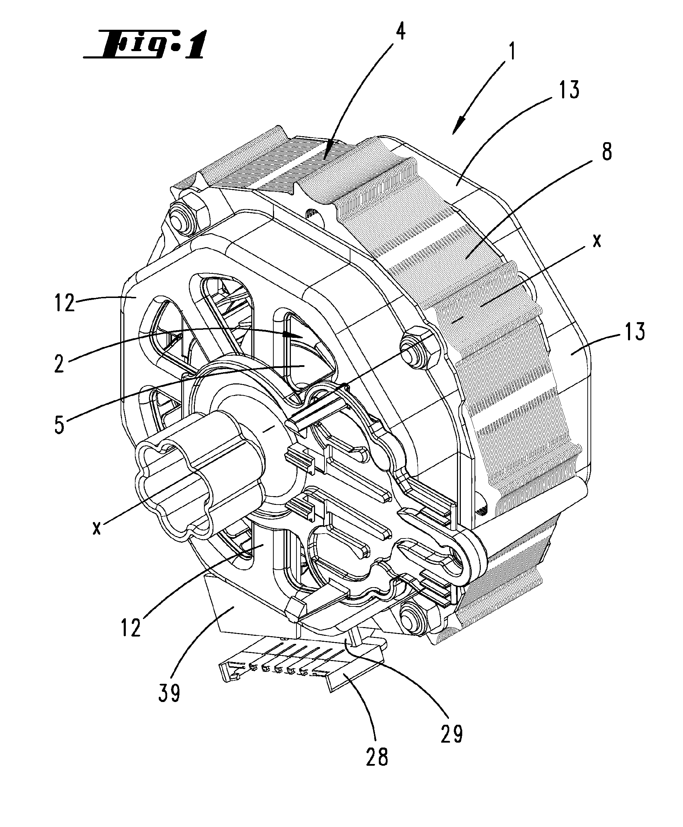

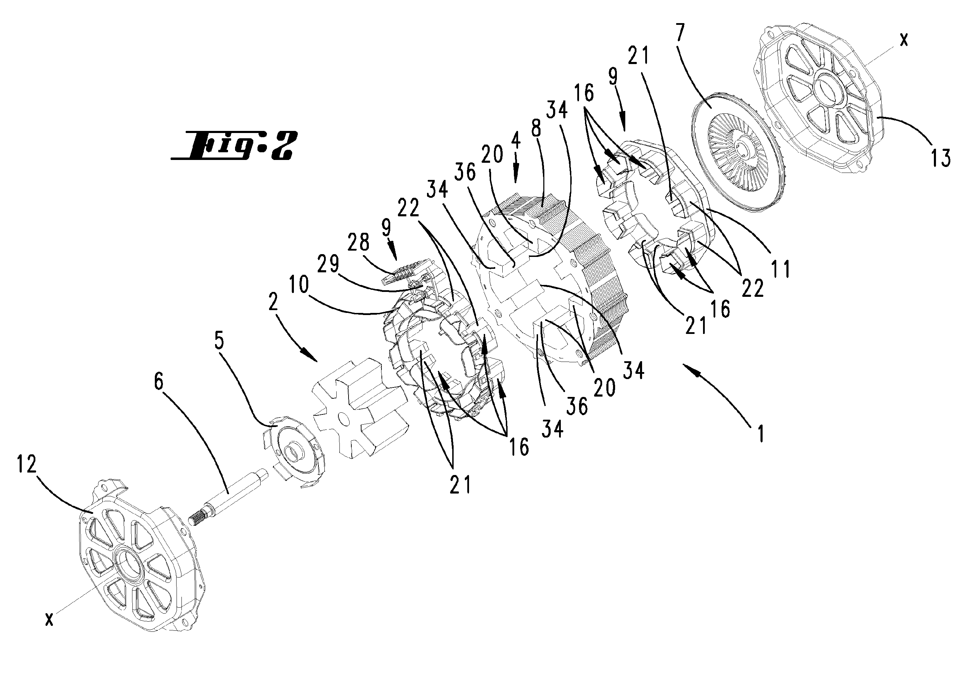

Dargestellt und beschrieben ist zunächst mit Bezug zu den Fig. 1 und 2 ein Reluktanzmotor 1 in Form eines 8/6-Reluktanzmotors mit einem sechspoligen Rotor 2 und einem, acht Statorspulen 3 aufweisenden Stator 4.

Wie aus der Explosionsdarstellung in Fig. 2 zu erkennen, weist der Reluktanzmotor 1 neben dem erwähnten Rotor 2 im Wesentlichen noch eine Geberscheibe 5, einen Rotorachskörper 6, sowie einen Lüfter 7 auf. Geberscheibe 5, Rotor 2 und Lüfter 7 sind drehfest zueinander auf dem Rotorachskörper 6 befestigt und koaxial zu einer Rotordrehachse x angeordnet.

Der gleichfalls koaxial zur Rotordrehachse x ausgerichtete Stator 4 setzt sich im Wesentlichen aus einem Statorkern 8 und einem, die in Fig. 2 nicht dargestellten Statorspulen 3 tragenden, zweiteiligen Statorabdeckkörper 9 zusammen. Letzterer ist gebildet durch ein Abdeckkörper-Oberteil 10 und ein Abdeckkörper-Unterteil 11, welche beiden Abdeckkörperteile 10 und 11 durch topfartige Brücken 12 und 13 überdeckt werden. Letztere formen zugleich Lagerungen für den Rotorachskörper 6 aus.

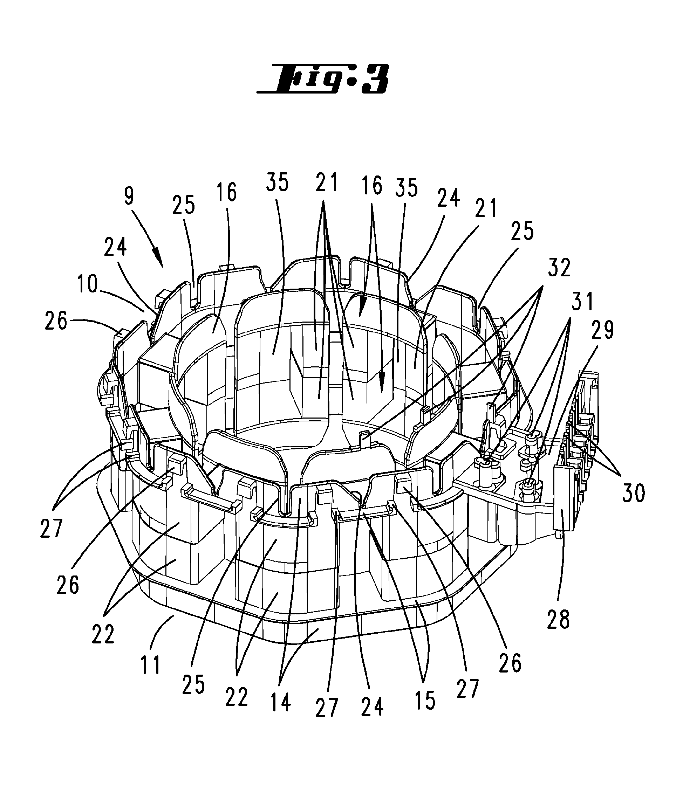

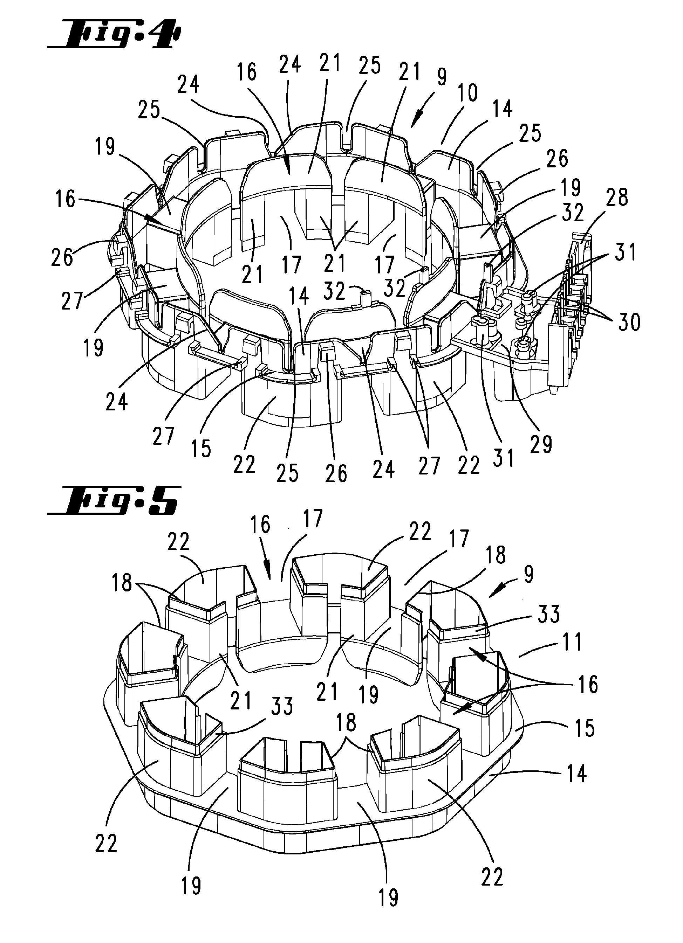

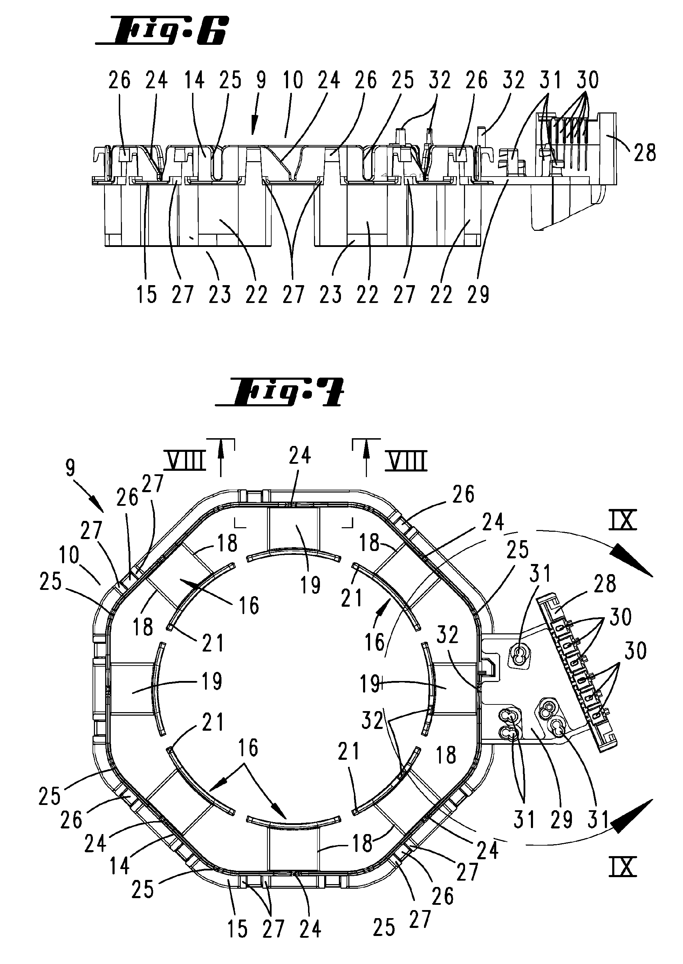

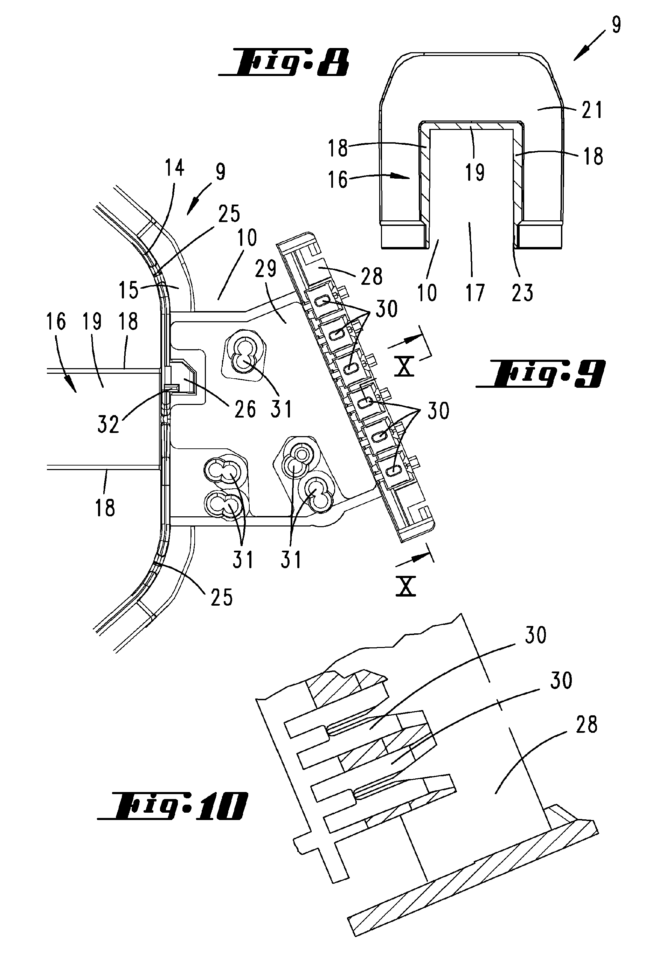

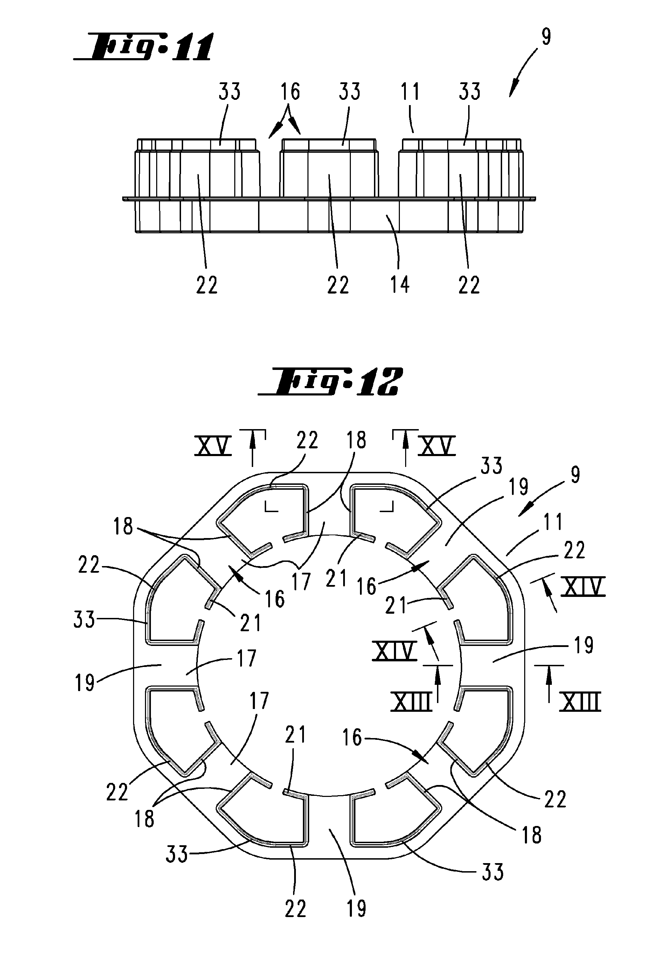

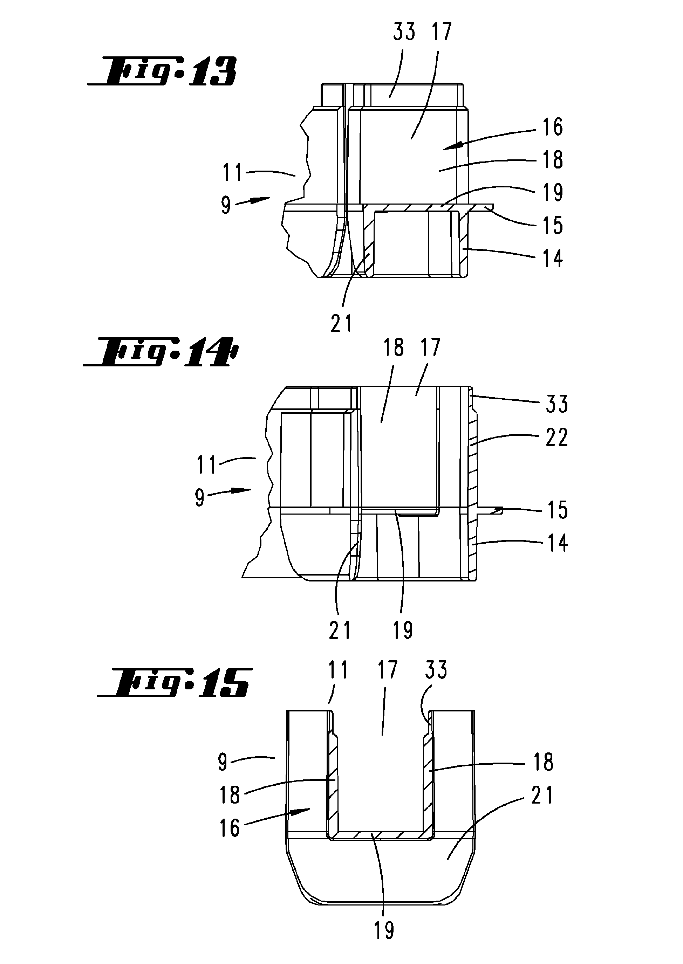

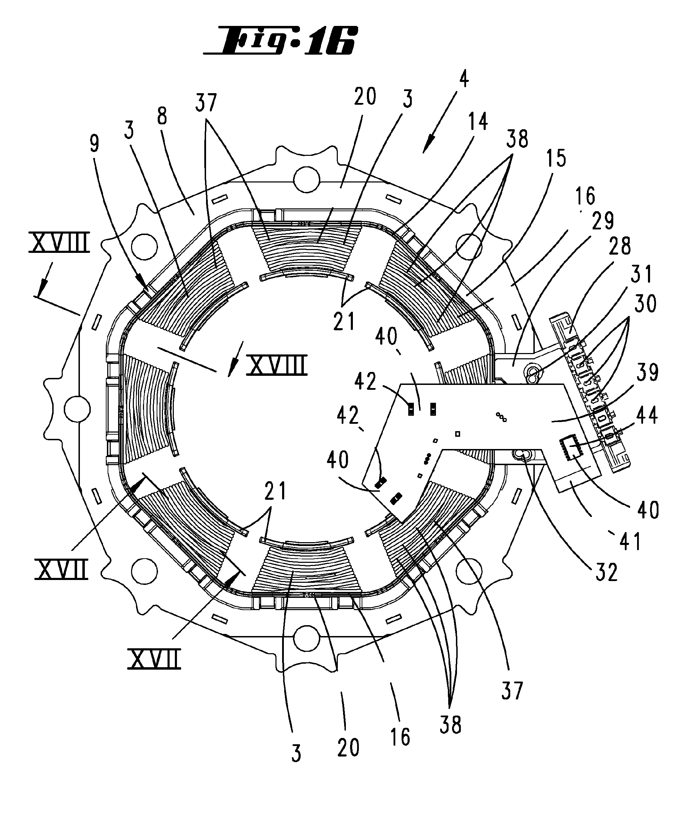

Anhand der Fig. 3 bis 15 wird der zweiteilige Statorabdeckkörper 9 näher beschrieben.

Das Oberteil 10 ist im Grundriss im Wesentlichen achteckig mit verrundeten Kanten ausgebildet, wobei zunächst eine umlaufende, partiell unterbrochene Rückwand 14 vorgesehen ist, an welcher fußseitig radial nach außen ein umlaufender, gleichfalls partiell unterbrochener Kragen 15 angeformt ist.

Jeweils zwischen zwei Eckzonen sind fußseitig der Rückwand 14 radial nach innen weisende Wickelkernschuhe 16 angeformt, die sich in axialer Richtung von der Rückwand-Fußlinie ausgehend nach radial innen des Oberteils 10 erstrecken.

Jeder Wickelkernschuh 16 ist im Querschnitt U-förmig gestaltet mit einer nach unten, das heißt zu der Rückwand 14 abgewandten U-Öffnung 17. Die beiden parallel zueinander beabstandeten U-Schenkel 18 und der diese verbindende, in der Ebene der Fußlinie der Rückwand 14 sich erstreckende U-Steg 19 weisen eine Tiefe auf, die der radialen Tiefe eines zuordbaren Wickelkerns 20 des Statorkerns 8 entspricht. Auch der parallele Abstand der U-Schenkel 18 zueinander ist an das Breitenmaß eines Wickelkerns 20 angepasst. Der Abstand des U-Steges 19 bis zur Ebene der U-Öffnung und somit die in Achsrichtung gemessene Länge jedes U-Schenkels 18 eines Wickelkernschuhs 16 ist geringfügig größer gewählt als die halbe axiale Höhe eines Wickelkerns 20.

An den nach radial innen weisenden Randkanten der U-Schenkel 18 und des U-Stegs 19 ist außenrandseitig ein entsprechend im Grundriss U-förmiges Abdeckschild 21 angeformt, wobei der dem U-Steg 19 zugeordnete Abschnitt des Abdeckschilds 21 eine radial zu diesem durch den U-Steg 19 beabstandeten Rückwand 14 entsprechende Höhe aufweist.

Im Grundriss des Abdeckkörper-Oberteils 10 betrachtet, sind die Abdeckschilde 21 so ausgerichtet, dass diese jeweils zum benachbarten Abdeckschild 21 beabstandet sind und insgesamt einen durch regelmäßige Axialschlitze unterbrochenen Hohlzylinder ausformen, in welchem der Rotor 2 frei drehbar ist.

Das umfangsmäßige Beabstandungsmaß zwischen zwei Abdeckschilden 21 beträgt etwa 1/4 bis 1/6 der Umfangslänge eines Abdeckschildes 21.

Die einander zugewandten U-Schenkel 18 zweier benachbarter Wickelkernschuhe 16 sind über eine, sich im Wesentlichen in der Vertikalebene der Rückwand 14 erstreckende Abdeckwand 22 verbunden.

Die beiden U-Schenkel 18, die Abdeckwand 22 und die zwei zugewandten Flügel der Abdeckschilde 21 zweier benachbarter Wickelkernschuhe 16 bilden in ihrem, der U-Öffnung 17 der Wickelkernschuhe 16 zugewandten Endbereich eine Fügekontur für das Unterteil 11 aus, wozu entlang der so gebildeten Linie durch Materialreduzierung eine Stufe 23 gebildet ist, mit einer in Achsrichtung gemessenen Länge von ca. 0,5 mm. Durch die Stufe 23 ist beispielsweise im Bereich der U-Schenkel 18 ein Versatz in Richtung der zugeordneten U-Öffnung 17 erreicht, wobei dieser Versatz der halben Materialstärke entspricht.

Wie bereits angedeutet, ist die Rückwand 14 in Umfangsrichtung partiell unterbrochen. So sind mittig eines jeden U-Stegs 19 eines Wickelkernschuhs 16 talförmige Durchführausnehmungen 24 vorgesehen, welche sich von der Fußlinie der Rückwand 14 ausgehend zum freien Ende der Rückwand 14 hin in etwa V-förmig erweitern.

Zugeordnet einer jeden Eckzone des im Wesentlichen achteckigen Oberteils 10 und somit mittig zwischen zwei benachbarten Wickelkernschuhen 16 ist eine weitere, hier jedoch schlitzartig mit gleichbleibender Breite sich zum freien Ende der Rückwand 14 hin sich öffnende Durchführausnehmung 25 vorgesehen, welche sich gleichfalls bis zur Fußlinie der Rückwand 14 erstreckt.

Die durch die Ausformung der Durchführungsausnehmungen 24 und 25 freigestellten Rückwand-Abschnitte tragen vereinzelt radial außen angeformte, hakenartig in Richtung auf den Kragen 15 weisende Wickeldrahtführungselemente 26. Im Überdeckungsbereich zu diesen Wickeldrahtführungselementen 26 ist der Kragen 15 unterbrochen. Die dieser Unterbrechung zugeordneten Enden der Kragenabschnitte weisen nach oben, das heißt in Richtung auf die Wickeldrahtführungselemente 26 weisende Wickeldrahtbeabstandungsrippen 27 auf.

Das, wie auch das Unterteil 11 bevorzugt im Kunststoffspritzverfahren hergestellte Oberteil 10 trägt des Weiteren einen angeformten Anschlussstecker 28.

Dieser ist über einen Verbindungsabschnitt 29 mit dem Oberteil 10 verbunden, welcher Verbindungsabschnitt 29 außenseitig des Oberteils 10 auf Höhe des Kragens 15 angeformt ist und sich von dem Kragen 15 ausgehend zunächst in radialer Richtung erstreckt, woran sich ein in der Ebene des Verbindungsabschnitts 29 abgekröpfter Abschnitt anschließt. An Letzterem ist endseitig senkrecht zu diesem ausgerichtet der Anschlussstecker 28 angeformt.

Dieser Anschlussstecker 28 ist mit sechs metallischen Kontaktelementen 30 in Form von Scherenkontakten ausgestattet.

Auf dem Verbindungsabschnitt 29 sind in dem Ausführungsbeispiel fünf unterschiedliche Höhen aufweisende Wickeldrahtumlenkelemente 31 ausgebildet.

Weiter sind in dem, dem Verbindungsabschnitt 29 bzw. dem Anschlussstecker 28 zugeordneten Bereich eines Abschnitts der Rückwand 14 und im Bereich zweier benachbarter Abdeckschilde 21 in Achsrichtung über die freie Randkante der Rückwand 14 bzw. der Abdeckschilde 21 frei abragende Befestigungsnoppen 32 angeformt.

Das Unterteil 11 des Statorabdeckkörpers 9 ist im Wesentlichen, das heißt insbesondere hinsichtlich der Grundrissgestaltung der Wickelkernschuhe 16, weiter bezüglich des Kragens 15 sowie der Rückwand 14, der Abdeckschilde 21 und der Abdeckwände 22 spiegelbildlich zum Oberteil 10 ausgeformt. Im Unterschied zum Oberteil 10 hingegen sind sowohl die Rückwand 14 als auch der Kragen 15 durchgehend, das heißt ohne partielle Unterbrechungen ausgeformt.

Die freien Enden der U-Schenkel 18, der Abdeckwand 22 und der beiden zugewandten Flügel der Abdeckschilde 21 zweier benachbarter Wickelkernschuhe 16 bilden zur überlappenden Zuordnung zu den Stufen 23 des Oberteils 10 jeweils eine Negativstufe 33 aus, welche wie auch im Oberteil 10 durch Materialreduzierung erreicht ist. Auch diese Negativstufe 33 weist eine entsprechend der Stufe 23 angepasste in Achsrichtung gemessene Länge von ca. 0,5 mm auf, wobei der hierdurch ausgeformte Versatz der halben Materialstärke entspricht.

Auch bei dem Unterteil 11 besitzen die beiden parallel zueinander beabstandeten U-Schenkel 18 und der diese verbindende, in der Ebene der Fußlinie sich erstreckende U-Steg 19 eine Tiefe, welcher der radialen Tiefe eines zuordbaren Wickelkerns 20 des Statorkerns 8 entspricht. Auch der Abstand der U-Schenkel 18 sowie der Abstand des U-Stegs 19 bis zur Ebene der U-Öffnung 17 ist an den Querschnitt eines Wickelkerns 20 angepasst.

Oberteil 10 und Unterteil 11 des Statorabdeckkörpers 9 werden vor dem Wickeln der Statorspulen 3 gegensinnig in axialer Richtung in den Statorkern 8 eingeschoben unter Überlappung der Stufen 23 und Negativstufen 33, wobei zufolge dieser stufenförmigen, variablen Überlappung Höhentoleranzen des Statorkerns ausgeglichen werden können.

Der eingeschobene zweigeteilte Statorabdeckkörper 9 überfängt die Wickelkerne mittels der Wickelkernschuhe 16, wobei sich der U-Steg 19 des Oberteils 10 auf einer der sich gegenüberliegenden axialen Stirnflächen 34 des Wickelkerns 20 und der U-Steg 19 des Unterteils 11 auf der anderen Stirnfläche 34 des Wickelkerns 20 abstützt. Die U-Schenkel 18 sowohl des Oberteils 10 als auch des Unterteils 11 flankieren die Wickelkerne 20.

Im zusammengesteckten Zustand des zweigeteilten Statorabdeckkörpers 9 umschließen die Abdeckschilde 21 des Oberteils 10 und des Unterteils 11 ein Fenster 35, in welchem die dem Rotor 2 zugewandte Kernfläche 36 des Wickelkerns 20 freiliegt.

Die Kragen 15 des Oberteils 10 und des Unterteils 11 dienen zur Einstecktiefenbegrenzung der beiden Teile des Statorabdeckkörpers 9. Nach einem Einstecken von Oberteil 10 und Unterteil 11 in den Statorkern 8 liegen die Kragen 15 ober- bzw. unterseitig auf der zugeordneten Oberfläche des Statorkerns 8 auf.

Der eingesteckte Statorabdeckkörper 9 wird mittels einer Wickelmaschine mit Statorspulen 3 versehen, wobei in einem ersten Schritt eine erste Hälfte der Statorspulen 3 gleichzeitig gewickelt wird, so in dem Ausführungsbeispiel vier nebeneinander in Umfangsrichtung angeordnete Statorspulen 3. Die zum Wickeln zugeführten Wicklungsdrähte 37 werden hierzu zunächst auf der den Wickelkernschuhen 16 abgewandten Seite der Rückwand 14 entlang dieser geführt und durch die talförmigen, mittig in den Wickelkernschuhen 16 ausgebildeten Durchführausnehmungen 24 in den Wickelbereich verbracht. Nach Aufbringen der einzelnen Statorwicklungen 38 zur Bildung einer Statorspule 3 werden die Wicklungsdrähte 37 der nunmehr erstellten vier Statorspulen 3 durch die weiteren Durchführungsausnehmungen 25 wiederum zur rückwärtigen Seite der Rückwand 14 verbracht, wonach sich die Wickelmaschine um 180° um die Achse x gedreht den weiteren vier zu wickelnden Statorspulen 3 zuwendet, dies ohne Durchtrennung der von den ersten vier, bereits fertiggestellten Statorspulen 3 kommenden Wicklungsdrähten 37. Die Herstellung der weiteren vier Statorspulen 3 erfolgt in gleicher Weise wie die ersten vier.

Demzufolge sind die Statorspulen 3 paarweise miteinander verbunden. Konkret bilden hierbei stets zwei sich diametral gegenüberliegende Statorspulen 3 ein mit demselben Wicklungsdraht 37 gewickeltes Statorspulenpaar.

Die außen an der Rückwand 14 entlang geführten Wicklungsdrähte 37 sind an einem Abrutschen von der Rückwand 14 durch die Wicklungsdrahtführungselemente 26 gehindert. Zudem ist durch die auf dem Kragen 15 aufgebrachten Wickeldrahtbeabstandungsrippen 27 ein Sicherheitsabstand der Wicklungsdrähte 37 zum Statorkern 8 gewährleistet.

Die Enden der vier, die Statorspulen 3 ausformenden Wicklungsdrähte 37 sind unter Umlenkung mittels der auf dem Verbindungsabschnitt 29 angeordneten Wickeldrahtumlenkelemente 31 zum Anschlussstecker 28 geführt und dort an den Kontaktelementen 30 befestigt. Wie aus den Darstellungen zu erkennen, sind sechs Kontaktelemente 30 vorgesehen zur Aufnahme von 8 Wickeldrahtenden. So sind an zwei durch die Kontaktelemente 30 gebildeten Steckerplätzen jeweils zwei Wickeldrahtenden angeschlossen.

Fig. 22 zeigt schematisch das Anschlussschema der einzelnen Statorspulen. So sind an der Phase PH₁ die auf dem Statorabdeckkörper 9 sich gegenüberliegenden Statorspulen 3.1 und 3.2 in Reihe geschaltet, wobei der von der Statorspule 3.2 abführende Wickeldraht 37 gleichfalls verbunden ist mit dem Abgang der der Phase PH₃ zugeordneten Statorspulen 3.5 und 3.6. Ebenso sind auch die Statorspulenpaare 3.3, 3.4 der Phase PH₂ und 3.7, 3.8 der Phase PH₄ einendig zusammengefasst. Demzufolge ergeben sich bei acht Spulen 3 und demnach vier Phasen insgesamt sechs Wicklungsdrahtenden, die an dem Anschlussstecker 28 befestigt sind.

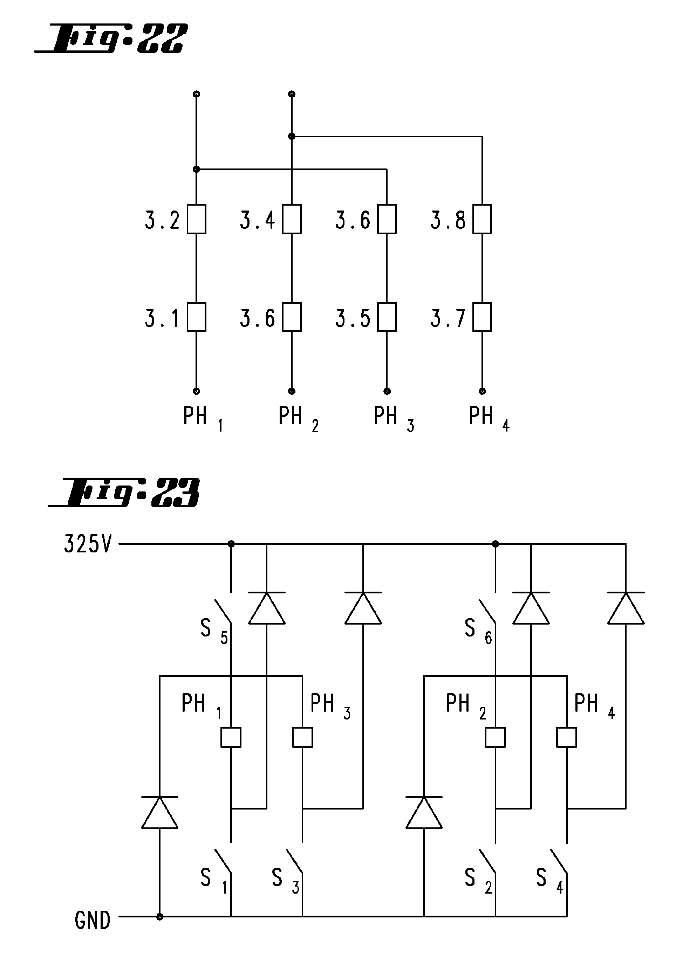

In Fig. 23 ist schematisch die Schaltung der einzelnen Phasen dargestellt. Diese werden über Schalter aktiviert, wobei mit Bezug auf die Motorverschaltung in Fig. 22 jedem Wicklungsdrahtende bzw. jedem Kontaktelement 30 des Anschlusssteckers 28 ein Schalter S₁ bis S₆ zugeordnet ist. So wird beispielsweise durch Schließen der Schalter S₁ und S₅ die Phase PH₁ geschaltet, wonach, gegebenenfalls zeitlich überlappend die Phase PH₂ durch Schalten der Schalter S₂ und S₆ angesteuert wird. Während die Phase PH₂ noch aktiv ist, fällt die Phase PH₁ ab, dies durch Öffnen zumindest des Schalters S₁, wonach die Phase PH₃ durch Schließen der Schalters S₃ und des Schalters S₅ aktiviert wird. Entsprechend wird bei der Phase PH₄ verfahren.

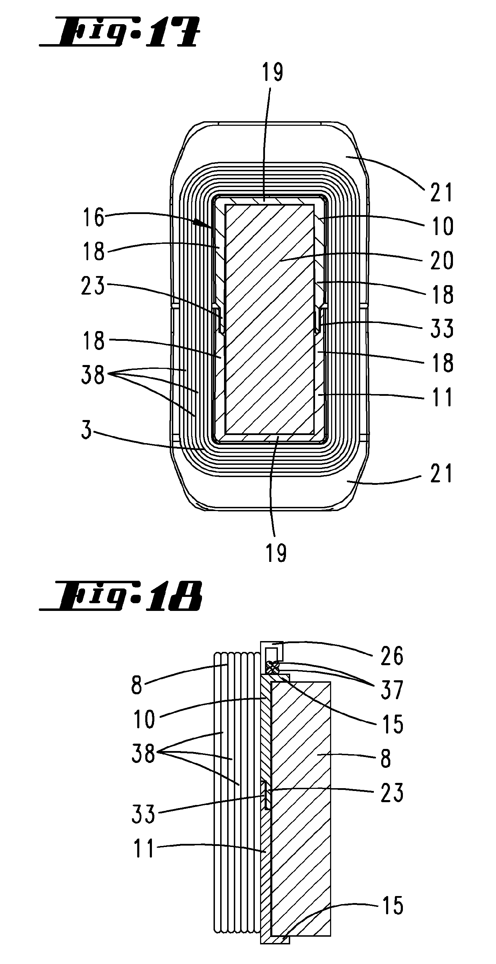

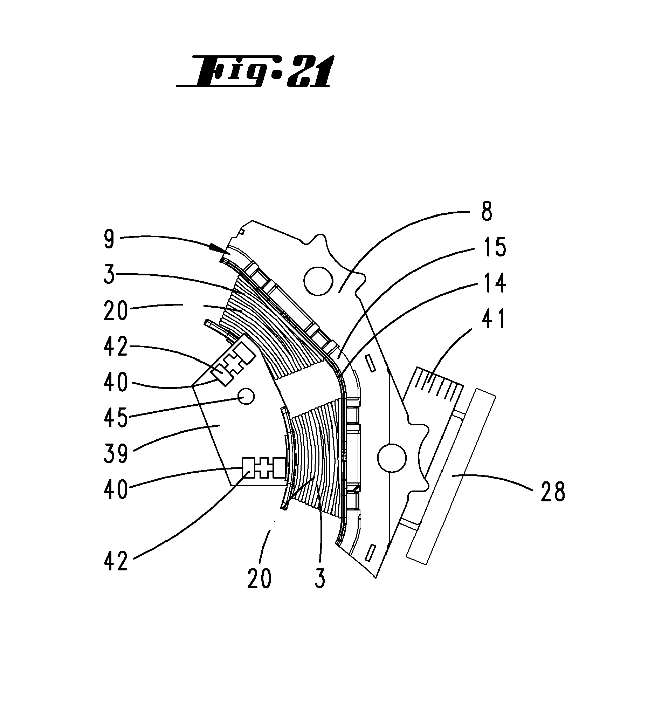

Wie weiter insbesondere aus den Darstellungen in den Fig. 16 und 21 zu erkenne, ist eine Platine 39 als Träger von Elektronikbauteilen 40 vorgesehen. Diese ist an dem Statorabdeckkörper 9 in unmittelbarer Nachbarschaft zum Anschlussstecker 28 mittels der erwähnten Befestigungsnoppen 32 befestigt, dies bevorzugt durch Schmelzumformbefestigen.

Die Platine 39 weist einen etwa C-förmigen Grundriss auf, wobei ein C-Schenkel außerhalb des Statorabdeckkörpers 9, etwa parallel ausgerichtet zum Anschlussstecker 28 frei kragend über den Verbindungsabschnitt 29 ragt und der andere C-Schenkel radial nach innen über die Wickelkernschuhe 16 hinaus in den Bereich des Rotors 2 einragt. Der die beiden C-Schenkel der Platine 39 verbindende C-Steg ist in radialer Richtung angeordnet. Die durch Schmelzumformung die Platine 39 an dem Statorabdeckkörper 9 halternden Befestigungsnoppen 32 durchsetzen die Platine 39 in entsprechend angeordneten Durchbrechungen.

Der nach außen, das heißt in Richtung auf den Anschlussstecker 28 ragende Abschnitt der Platine ist unterseitig, das heißt in Richtung auf den Statorkern 8 weisend mit einer Steckeraufnahme 41 zur Aufnahme eines mit einem entsprechenden Stecker versehenen Anschlusskabels versehen.

Der radial nach innen in den Rotorbereich einragende Abschnitt der Platine 39 trägt unterseitig, das heißt in Richtung auf den Rotor gewandt zwei umfangsmäßig um 45° zueinander beabstandete Lichtschranken 42, bevorzugt Gabellichtschranken, wobei weiter die Lichtschranken jeweils in Umfangsrichtung betrachtet mittig eines zugeordneten Wickelkerns 20 angeordnet sind. Diese Lichtschranken 42 werden im Motorbetrieb durch Geberausformungen 43 der Geberscheibe 5 durchfahren, zufolge dessen mittels der ermittelten und ausgewerteten Impulse die momentane Rotorstellung erfasst werden kann. Die Signale werden von einer auf der Platine 39 angeordneten Sensorik 44 ausgewertet.

Zudem trägt die Platine 39 gleichfalls in dem in den Rotorbereich hineinragenden Abschnitt unterseitig und im Wesentlichen umfangsmäßig mittig zwischen den Lichtschranken 40 einen Temperaturfühler 45, welcher radial betrachtet außerhalb des Durchtrittsbereichs der Geberausformungen 43 der Rotor-Geberscheibe 5 positioniert ist. Dieser Temperaturfühler dient zur Erfassung der Motortemperatur, wozu eine von dem Temperaturfühler 45 gemessene Lufttemperatur zur Erfassung der Motortemperatur herangezogen ist.

Ein weiterer Vorteil der erfindungsgemäßen Anordnung der Platine 39 im Bereich des Anschlusssteckers 28 besteht darin, dass die Platine 39 durch den sich höhenmäßig über diese erstreckenden Anschlussstecker 28 in einer geschützten Verstecktlage sitzt. Zudem ergibt sich eine kurze Toleranzkette zum Stator 4, dem zufolge kein Ausrichten der Platine 39 aufgrund der hohen Positionsgenauigkeit erforderlich ist.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Verfahren zum Wickeln eines Reluktanzmotors (1) mit einem Rotor (2) und einem Wickelkerne aufweisenden Stator (4), weiter mit einer geraden Anzahl von Statorspulen (3), wobei weiter ein Wickelkernschuhe (16) aufweisender Statorabdeckkörper vorgesehen ist, **dadurch gekennzeichnet, dass** in einem ersten Schritt die Hälfte der Statorspulen (3) vermittels des die Wickelkerne überdeckenden Statorabdeckkörpers gleichzeitig gewickelt wird und dass in einem zweiten Schritt ohne Durchtrennung der Wicklungsdrähte (37) die zweite Hälfte der Statorspulen (3) gewickelt wird, so dass die Statorspulen paarweise miteinander verbunden werden.

2. Verfahren nach Anspruch 1, **dadurch gekennzeichnet, dass** beim Verfahren von der ersten Hälfte der Statorspulen (3) zu der zweiten Hälfte der Statorspulen (3) die Wicklungsdrähte (37) der bereits gewickelten Statorspulen (3) radial außen der Statorspulen (3) geführt werden.

3. Verfahren nach einem der Ansprüche 1 oder 2, **dadurch gekennzeichnet, dass** die Wicklungsdrähte (37) von bzw. zu einem Anschlussstecker (28) geführt werden und dass an dem Anschlussstecker (28) an einem oder mehreren Steckerplätzen zwei Wickeldrähte (37) angeschlossen werden.
